Europäisches Patentamt

European Patent Office

Office européen des brevets

(11) Numéro de publication : **0 140 800**
**B1**

# FASCICULE DE BREVET EUROPÉEN

(45) Date de publication du fascicule du brevet :
27.05.87

(21) Numéro de dépôt : **84420154.1**

(22) Date de dépôt : **18.09.84**

(51) Int. Cl.⁴ : **D 03 C   1/14**

(54) **Perfectionnement aux ensembles de leviers de tirages montés sur les ratières et autres mécaniques pour la formation de la foule sur les machines à tisser.**

(30) Priorité : **21.09.83 FR 8315198**

(43) Date de publication de la demande :
**08.05.85 Bulletin 85/19**

(45) Mention de la délivrance du brevet :
**27.05.87 Bulletin 87/22**

(84) Etats contractants désignés :
**BE CH DE IT LI**

(56) Documents cités :
**DE-C-   395 869**
**FR-A- 2 229 885**
**FR-A- 2 256 975**
**FR-A- 2 381 205**
**GB-A-   535 546**
**US-A- 2 895 770**

(73) Titulaire : **S.A. DES ETABLISSEMENTS STAUBLI (France)**
**F-74210 Faverges (FR)**

(72) Inventeur : **Froment, Jean-Paul**
**La Creuse Sud Doussard**
**FR-74210 Faverges (FR)**

(74) Mandataire : **Monnier, Guy et al**
**Cabinet Monnier 142-150 Cours Lafayette B.P. 3058**
**F-69393 Lyon Cedex 03 (FR)**

EP 0 140 800 B1

Jouve, 18. rue St-Denis. 75001 Paris, France

## Description

La présente invention a trait aux ratières et autres mécaniques utilisées pour la formation de la foule sur les machines à tisser et elle concerne plus particulièrement les ensembles de leviers de tirage interposés entre les organes d'actionnement de la mécanique et les cadres de lisses de la machine correspondante.

On sait que chaque mécanique incorpore habituellement un premier ensemble de leviers oscillants, ceux-ci étant directement attelés aux organes d'actionnement en vue de transmettre le mouvement vertical de monte et baisse aux cadres de lisses associés à ladite mécanique. Par ailleurs, un ou plusieurs ensembles de leviers oscillants sont prévus sur le système de tirage à câbles ou à bielles qui assure la transmission visée ci-dessus.

Dans la pratique usuelle, chacun de ces ensembles comprend un axe fixe qui supporte, soit directement, soit avec interposition de roulements, une série de leviers montés côte à côte. Le guidage axial de ces leviers est opéré par frottement mutuel de leurs faces latérales, convenablement usinées à cet effet. On conçoit qu'un tel agencement nécessite des graissages très fréquents, tout défaut de lubrification provoquant un grippage des pièces. En dépit de ce graissage, l'usure des faces latérales des leviers est relativement rapide. On notera encore que lorsque l'axe fixe ou pivot est orienté obliquement par rapport à l'horizontale (et ce cas n'est pas rare en pratique), les efforts de frottement dans le sens axial deviennent importants et limitent la vitesse de fonctionnement des machines à tisser.

C'est à ces inconvénients qu'entend principalement remédier la présente invention, laquelle consiste essentiellement à interposer entre les différents leviers de l'ensemble une butée axiale formée par deux disques minces profilés en vue de déterminer une piste de roulement pour une rangée de billes, et à faire agir sur l'empilage ainsi réalisé un effort de pression axiale pratiquement constant.

Le dessin annexé, donné à titre d'exemple, permettra de mieux comprendre l'invention, les caractéristiques qu'elle présente et les avantages qu'elle est susceptible de procurer :

Figure 1 est une coupe axiale partielle d'un ensemble de leviers de tirage établi conformément à l'invention.

Figure 2 est une coupe de détail illustrant la conformation des disques qui forment l'une des butées axiales de l'ensemble suivant fig. 1.

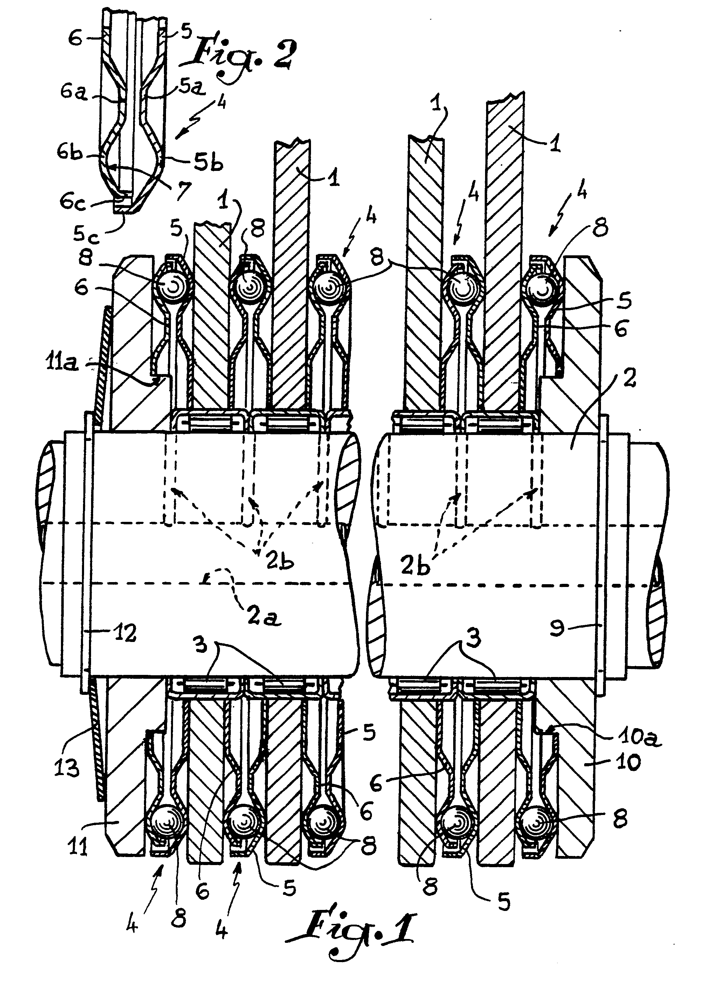

En fig. 1, la référence 1 désigne les leviers oscillants de tirage engagés sur un axe fixe 2 avec interposition de roulements à aiguilles 3. Entre deux leviers 1 adjacents est interposée une butée axiale 4 formée par deux disques 5 et 6 dont l'ouverture centrale, elle-même engagée sur l'axe 2, prend appui sur les parties débordantes des roulements 3 précités.

Chaque disque 5 ou 6 est constitué par une tôle très mince qui a été emboutie pour comporter une dépression annulaire 5a, respectivement 6a (fig. 2), celle-ci déterminant au voisinage de la périphérie une cuvette 5b, 6b, elle-même de forme annulaire, le bord libre de chaque disque étant replié axialement afin de réaliser un bec 5c, 6c ; le disque 5 de chaque butée 4 est établi à un diamètre légèrement supérieur à celui du disque 6, de telle sorte que les deux becs annulaires 5c et 6c se chevauchent l'un l'autre lorsque les deux disques sont accouplés avec les cuvettes 5b et 6b ouvertes en vis-à-vis.

On comprend dans ces conditions que ces deux cuvettes délimitent un espace annulaire référencé 7 en fig. 2, lequel forme logement ou piste pour une rangée de billes 8 (fig. 1) qui maintiennent les deux disques 5 et 6 de chaque butée 4 à une distance axiale appropriée. Chaque butée 4 joue le rôle d'une entretoise d'espacement vis-à-vis des deux leviers 1 entre lesquels elle est intercalée.

Au voisinage de l'une de ses extrémités, l'axe fixe 2 porte un jonc élastique 9 formant butée pour un flasque latéral 10 ; celui-ci comporte un épaulement annulaire 10a constituant appui pour le disque 5 d'une première butée 4, interposée entre ledit flasque 10 et le premier levier de tirage 1 de l'ensemble considéré. De la même manière, le disque 6 de la dernière butée axiale 4 de cet ensemble prend appui sur l'épaulement annulaire 11a d'un second flasque latéral 11 et l'on observera qu'entre ce flasque 11 et le jonc élastique 12 fixé sur l'axe 2 en vue de sa retenue axiale est interposée une rondelle élastiquement déformable 13, conformée de façon à jouer le rôle de ressort, à la manière des rondelles du type Belleville.

On conçoit que cette rondelle 13 maintient sous un effort axial pratiquement constant l'empilage qui constitue l'ensemble suivant l'invention. Cet effort axial assure la géométrie correcte des disques 5 et 6 qui forment les différentes butées 4, si bien que celles-ci sont en mesure d'opérer le guidage parfait des leviers 1.

Les essais ont démontré qu'un tel système de guidage évitait toute usure consécutive au frottement. On a pu constater qu'aucun effet de coincement n'apparaissait, même dans le cas où l'axe fixe 2 était orienté obliquement par rapport à l'horizontale, en permettant de la sorte l'obtention de vitesses de fonctionnement très élevées.

La lubrification est susceptible d'être opérée de manière moins fréquente que dans les systèmes classiques. Conformément à un mode mise en œuvre particulièrement avantageux de l'invention, l'on peut faire comporter à l'axe 2 un alésage axial 2a dans lequel débouchent des trous radiaux 2d disposés de manière à s'ouvrir entre les différents roulements 3 et entre ceux-ci et les flasques latéraux 10 et 11. Il suffit d'injecter périodiquement un lubrifiant dans l'alésage 2a pour opérer le graissage simultané des roulements 3 et des billes 8 des butées axiales 4.

On conçoit sans peine que la rondelle déformable 13 est susceptible d'être remplacée par une bague de poussée, vissée ou autrement fixée sur l'une des extrémités de l'axe 1, afin d'exercer une pression axiale constante sur les butées 4.

## Revendications

1. Ensemble de leviers de tirage destiné à être monté sur les ratières et autres mécaniques pour la formation de la foule sur les machines à tisser, du genre comprenant un axe fixe (2) formant support pour une série de leviers oscillants (1) disposés côte à côte, caractérisé en ce qu'entre les leviers (1) est interposée une butée axiale (4) formée par deux disques minces (5, 6) profilés en vue de déterminer une piste (7) pour une rangée de billes (8), des moyens (13) étant prévus pour soumettre lesdites butées (4) et les leviers (1) à un effort de pression axiale pratiquement constant.

2. Ensemble de leviers suivant la revendication 1, caractérisé en ce que l'effort de pression axiale est fourni par une rondelle déformable (13) prévue au voisinage de l'une des extrémités de l'axe fixe (2).

3. Ensemble de leviers suivant l'une quelconque des revendications 1 et 2, caractérisé en ce que contre chacun des deux leviers d'extrémités (1) est appliquée une butée axiale (4) dont le disque extérieur (5 ou 6) prend appui contre un épaulement annulaire (10a, 11a) ménager dans la face intérieure d'un flasque latéral (10, 11) convenablement retenu axialement sur l'axe fixe (2).

4. Ensemble de leviers suivant l'une quelconque des revendications 1 à 3, caractérisé en ce que l'axe fixe (2) est creusé d'un alésage axial (2a) dans lequel débouchent des trous radiaux (2b) qui s'ouvrent entre les roulements (3) supportant les leviers (1), de façon à ce qu'une injection du lubrifiant dans l'alésage précité assure le graissage desdits roulements (3) et des butées axiales (4).

## Claims

1. Set of swinging levers intended to be installed on the dobbies or other mechanical drive devices serving to produce the fabrics on power looms, of such type comprising a fixed shaft (2) supporting a series of swinging levers (1) arranged side by side, characterized in that the levers (1) are separated by axial spacers (4) made of two thin discs (5, 6) the profiles of which define a rolling path (7) for a number of balls (8), the necessary means (13) being provided in order to exert a practically constant axial pressure on said spacers (4) and levers (1).

2. Set of levers according to claim 1, characterized in that the axial pressure is supplied by a deformable washer (13) fitted close to one end of the fixed shaft (2).

3. Set of levers according to claim 1 or 2, characterized in that an axial spacer (4) is fitted against each of the end levers (1), the outer disc (5 or 6) of said spacer resting against a ring shoulder (10a, 11a) provided in the inner face of a side stop plate (10, 11) locked in a suitable manner onto fixed shaft (2).

4. Set of levers according to any one of claims 1 to 3, characterized in that the fixed shaft (2) has an axial boring (2a) into which radial canals (2b) provided between the bearings (3) supporting the levers (1) open, in such a manner that oil can be injected into said boring in order to lubricate said bearings (3) and axial spacers (4).

## Patentansprüche

1. Zughebeleinheit, die zur Montage auf den Schaftmaschinen und anderen Mechanismen für die Bildung des Fachs an Webmaschinen bestimmt ist, von der Art, die eine feste Achse (2) enthält, die einen Träger für eine Serie von Schwinghebeln (1) bildet, die nebeneinander angeordnet sind, dadurch gekennzeichnet, daß zwischen den Hebeln (1) ein axialer Anschlag (4) angeordnet ist, der von zwei dünnen Scheiben (5, 6) gebildet ist, die so profiliert sind, daß sie eine Laufbahn (7) für eine Serie von Kugeln (8) bilden, wobei Einrichtungen (13) vorgesehen sind, um die genannten Anschläge (7) und die Hebel (1) einer praktisch konstanten axialen Druckwirkung auszusetzen.

2. Hebeleinheit nach Anspruch 1, dadurch gekennzeichnet, daß die axiale Druckwirkung von einer verformbaren Scheibe (13) aufgebracht wird, die benachbart dem einen der Enden der festen Achse (2) vorgesehen ist.

3. Hebeleinheit nach einem der Ansprüche 1 und 2, dadurch gekennzeichnet, daß gegen jeden der zwei endseitigen Hebel (1) ein axialer Anschlag (4) anliegt, dessen äußere Scheibe (5 oder 6) an einer ringförmigen Schulter (10a, 11a) anliegt, die in der Innenfläche eines Querflansches (10, 11) ausgebildet ist, der in axialer Richtung auf der festen Achse (2) in geeigneter Weise festgehalten ist.

4. Hebeleinheit nach einem der Ansprüche 1 bis 3, dadurch gekennzeichnet, daß die feste Achse (2) mit einer axialen Bohrung (2a) versehen ist, in die radiale Löcher (2b) münden, die sich zwischen die die Hebel (1) tragenden Lager (3) derart öffnen, daß eine Einleitung von Schmiermittel in den vorgenannten Hohlraum die Schmierung der genannten Lager (3) und der axialen Anschläge (4) sicherstellt.

*Fig. 2*

*Fig. 1*